# EUROPEAN PATENT SPECIFICATION

(11) **EP 4 469 354 B1**
(45) Date of publication and mention of the grant of the patent: **10.06.2026**
(21) Application number: 23708928.9
(22) Date of filing: 23.01.2023
(51) Int. Cl.: B64U 80/10, B64U 70/99, B64U 70/90, B64U 80/80

(54) **UNMANNED AERIAL VEHICLE LANDING PLATFORM SYSTEMS AND METHODS**
LANDEPLATTFORMSYSTEME UND -VERFAHREN FÜR UNBEMANNTES LUFTFAHRZEUG
SYSTÈMES ET PROCÉDÉS DE PLATE-FORME D'ATTERRISSAGE DE VÉHICULE AÉRIEN SANS PILOTE

(30) Priority: 28.01.2022 US 202263267284 P
(43) Date of publication of application: 04.12.2024
(73) Proprietor: FLIR Unmanned Aerial Systems ULC, Vancouver, British Columbia V7X 1L3 (CA); Teledyne FLIR, LLC, Thousand Oaks, CA 91360 (US)
(72) Inventor: INFANTI, James, Vancouver, British Columbia V7X1L3 (CA); PEGG, Albert, Vancouver, British Columbia V7X1L3 (CA)
(74) Representative: Murgitroyd & Company
(86) International application number: PCT/US2023/011342
(87) International publication number: WO 2023/146821

(56) References cited:
- WO-A1-2015/196127
- CN-A- 110 254 652
- ES-A1- 2 889 323
- US-A1- 2013 313 364
- US-B2- 9 187 186
- MUSA GALIMOV ET AL: "UAV Positioning Mechanisms in Landing Stations: Classification and Engineering Design Review", SENSORS, vol. 20, no. 13, 29 June 2020 (2020-06-29), pages 3648, XP055737196, DOI: 10.3390/s20133648

## Description

### CROSS REFERENCE TO RELATED APPLICATIONS

### TECHNICAL FIELD

The present invention relates generally to unmanned aerial vehicles and, more particularly, to landing systems and methods for unmanned aerial vehicles.

### BACKGROUND

Modern unmanned sensor platforms, such as unmanned aerial vehicles (UAVs), are able to operate over long distances and in various environments (e.g., rural, urban, undeveloped). In particular, UAVs are used to support a wide range of real-world applications including surveillance, reconnaissance, exploration, item transportation, disaster relief, aerial photography, large-scale agriculture monitoring, and other untethered or tethered applications. In conducting various missions, a UAV may have to land and take-off, often from mobile platforms (e.g., from a moving vehicle) and/or from platforms positioned on uneven or off-angle terrain. However, landing and takeoff of UAVs may require a level platform, such as a platform even/level with the horizon.

Thus, there exists a need for UAV landing platform systems and methods that address the deficiencies noted above, other deficiencies known in the industry, or at least offers an alternative to current techniques.
US9187186 B2 discloses a reduced dimensions platform for the landing of an aircraft on an access facility having a support base, suitable to be fixed on a reference surface belonging to the access facility, and a landing footboard, superiorly connected with the support base and suitable to receive the aircraft. Specifically, the landing footboard includes a central body, coupled with support base, and a plurality of peripheral panels, operatively connected with drive means which move the peripheral panels from/to a rest position, in which the peripheral panels are contained within the dimensions of the central body, to/from an operating position, in which the peripheral panels projects laterally from the central body.
ES2889323 A1 discloses a landing structure for unmanned aerial vehicle, UAV, comprising a frame, a landing base; and a gyro-stabilizer device, with control unit, gyroscopes and drive means to keep the landing base horizontal.
CN110254652 A discloses an unmanned aerial vehicle recovery and charging device based on a horizontal stabilization platform, comprising a lifting mechanism, an elastic rod mechanism, a horizontal stabilization mechanism and an unmanned aerial vehicle landing mechanism which are sequentially arranged from bottom to top, wherein a charging location device is arranged at the top end of the unmanned aerial vehicle landing mechanism, and a lifting charging device is arranged in the unmanned aerial vehicle landing mechanism; lifting grabbing devices are symmetrically arranged at the two sides of the lifting charging device; and an infrared beacon is arranged on each lifting grabbing device.
US2013/313364 A1 discloses a system comprising a ground unit that includes: a takeoff and landing platform; a landing and takeoff assisting module; and a housing. The takeoff and landing platform is arranged to hold and support an aerial unit during a first part of a landing process of the aerial unit and a first part of takeoff process of the aerial unit. The aerial unit is coupled to the ground unit via a connecting element. The effective length of the connecting element increases during the takeoff process and decreases during the landing process. The landing and takeoff assisting module is coupled to the takeoff and landing platform and is arranged to (a) lower the takeoff and landing platform into the housing during a second part of the landing process and (b) elevate the takeoff and landing platform during a second part of the takeoff process.

### SUMMARY

According to a first aspect of the present disclosure, there is provided a system according to claim 1.

According to a second aspect, there is provided a method according to claim 8.

The scope of the invention is defined by the claims. A more complete understanding of embodiments of the present invention will be afforded to those skilled in the art, as well as a realization of additional advantages thereof, by a consideration of the following detailed description of one or more embodiments. Reference will be made to the appended sheets of drawings that will first be described briefly.

### BRIEF DESCRIPTION OF THE DRAWINGS

FIG. 1A illustrates a block diagram of a system, in accordance with one or more embodiments of the present disclosure.
FIG. 1B illustrates a diagram of the system of FIG. 1A, in accordance with one or more embodiments of the present disclosure.
FIG. 2 illustrates a landing platform in a closed configuration, with portions of the platform shown transparent for illustration purposes, in accordance with one or more embodiments of the present disclosure.
FIG. 3 illustrates the landing platform in an open configuration, with portions of the platform shown transparent for illustration purposes, in accordance with one or more embodiments of the present disclosure.
FIG. 4 illustrates the landing platform in the open configuration and angled to compensate for an off-angle orientation of the system, in accordance with one or more embodiments of the present disclosure.
FIG. 5 illustrates the landing platform in a stowed position, with portions of the platform removed for illustration purposes, in accordance with one or more embodiments of the present disclosure.
FIG. 6 illustrates the landing platform of FIG. 5 raised to a launch position, in accordance with one or more embodiments of the present disclosure.
FIG. 7 illustrates the landing platform of FIG. 5 in the launch position and platform sections deployed, in accordance with one or more embodiments of the present disclosure.
FIG. 8 illustrates a side view of the landing platform of FIG. 7, in accordance with one or more embodiments of the present disclosure.
FIG. 9 illustrates the landing platform of FIG. 7 angled to compensate for an off-angle orientation of the system, in accordance with one or more embodiments of the present disclosure.
FIG. 10 illustrates a flow diagram of a process for positioning a UAV landing platform, in accordance with one or more embodiments of the present disclosure.

Embodiments of the present disclosure and their advantages are best understood by referring to the detailed description that follows. It is noted that sizes of various components and distances between these components are not drawn to scale in the figures. It should be appreciated that like reference numerals are used to identify like elements illustrated in one or more of the figures.

### DETAILED DESCRIPTION

The detailed description set forth below is intended as a description of various configurations of the subject technology and is not intended to represent the only configurations in which the subject technology can be practiced. The appended drawings are incorporated herein and constitute a part of the detailed description. The detailed description includes specific details for the purpose of providing a thorough understanding of the subject technology. However, it will be clear and apparent to those skilled in the art that the subject technology is not limited to the specific details set forth herein and may be practiced using one or more embodiments. In one or more instances, structures and components are shown in block diagram form in order to avoid obscuring the concepts of the subject technology. One or more embodiments of the subject disclosure are illustrated by and/or described in connection with one or more figures and are set forth in the claims.

Various systems and methods related to a UAV landing platform are provided. In one example, a platform for launching and/or landing a UAV includes a support plate adapted to support the UAV, folding elements adapted to position the UAV on the support plate, and one or more motors configured to align the support plate with a horizon based on a detected orientation of the support plate. A system may include the UAV, the platform, and a logic device configured to detect the orientation of the support plate relative to the horizon, and control the one or more motors to align the support plate with the horizon based on the detected orientation of the support plate. A method may include adjusting the platform to a desired angle relative to a horizon.

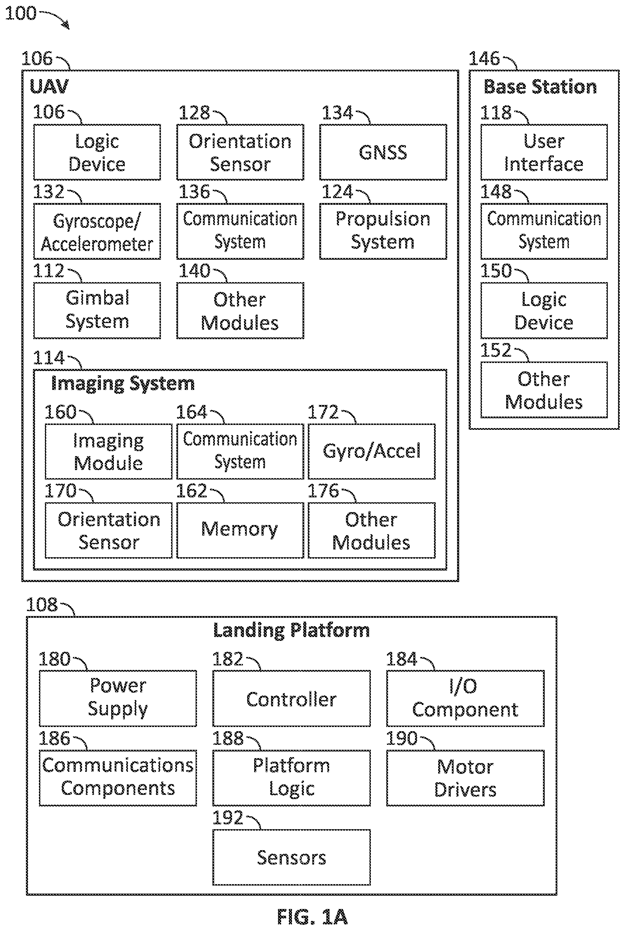

FIG. 1A illustrates a block diagram of a system 100 including a UAV 106 and a landing platform 108 in accordance with one or more embodiments of the present disclosure. In various embodiments, UAV 106 may be configured to fly over a scene or survey area, to fly through a structure, or to approach a target and image or sense the scene, structure, or target, or portions thereof, such using a gimbal system 112 to aim an imaging system/sensor payload 114 at the scene, structure, or target, or portions thereof, for example. Resulting imagery and/or other sensor data may be processed and displayed to a user through use of a user interface 118 (e.g., one or more displays such as a multi-function display (MFD), a portable electronic device such as a tablet, laptop, or smart phone, or other appropriate interface) and/or stored in memory for later viewing and/or analysis. In some embodiments, system 100 may be configured to use such imagery and/or sensor data to control operation of UAV 106 and/or sensor payload 114, such as controlling the gimbal system 112 to aim sensor payload 114 towards a particular direction, and/or controlling a propulsion system 124 to move UAV 106 to a desired position in a scene or structure or relative to a target. In some cases, the imagery and/or sensor data may be used to land UAV 106 at a target location or align UAV 106 to interact with the target location, which may be on landing platform 108.

UAV 106 may be implemented as a mobile platform configured to move or fly and position and/or aim the sensor payload 114 (e.g., relative to a designated or detected target). As shown in FIG. 1A, UAV 106 may include one or more of a logic device 126, an orientation sensor 128, a gyroscope/accelerometer 132, a global navigation satellite system (GNSS) 134, a communication system 136, gimbal system 112, propulsion system 124, and other modules 140. Operation of UAV 106 may be substantially autonomous and/or partially or completely controlled by a base station 146, which may include one or more of the following: user interface 118, a communications module 148, a logic device 150, and other modules 152. In other embodiments, UAV 106 may include one or more of the elements of base station 146, such as with various types of manned aircraft, terrestrial vehicles, and/or surface or subsurface watercraft. The sensor payload 114 may be physically coupled to UAV 106 and be configured to capture sensor data (e.g., visible spectrum images, infrared images, narrow aperture radar data, and/or other sensor data) of a target position, area, and/or object(s) as selected and/or framed by operation of UAV 106 and/or base station 146. In some embodiments, one or more of the elements of system 100 may be implemented in a combined housing or structure that can be coupled to or within UAV 106, a vehicle, and/or held or carried by a user of system 100.

Logic device 126 may be implemented as any appropriate logic device (e.g., processing device, microcontroller, processor, application specific integrated circuit (ASIC), field programmable gate array (FPGA), memory storage device, memory reader, or other device or combinations of devices) that may be adapted to execute, store, and/or receive appropriate instructions, such as software instructions implementing a control loop for controlling various operations of UAV 106 and/or other elements of system 100, such as the gimbal system 112, for example. Such software instructions may also implement methods for processing infrared images and/or other sensor signals, determining sensor information, providing user feedback (e.g., through the user interface 118), querying devices for operational parameters, selecting operational parameters for devices, or performing any of the various operations described herein (e.g., operations performed by logic devices of various elements of system 100).

In addition, a non-transitory medium may be provided for storing machine readable instructions for loading into and execution by logic device 126. In these and other embodiments, logic device 126 may be implemented with other components where appropriate, such as volatile memory, non-volatile memory, one or more interfaces, and/or various analog and/or digital components for interfacing with devices of system 100. For example, logic device 126 may be adapted to store sensor signals, sensor information, parameters for coordinate frame transformations, calibration parameters, sets of calibration points, and/or other operational parameters, over time, for example, and provide such stored data to a user using the user interface 118. In some embodiments, logic device 126 may be integrated with one or more other elements of UAV 106, for example, or distributed as multiple logic devices within UAV 106, base station 146, and/or sensor payload 114.

In some embodiments, logic device 126 may be configured to substantially continuously monitor and/or store the status of and/or sensor data provided by one or more elements of UAV 106, sensor payload 114, and/or base station 146, such as the position and/or orientation of UAV 106, sensor payload 114, and/or base station 146, for example. In various embodiments, sensor data may be monitored and/or stored by logic device 126 and/or processed or transmitted between elements of system 100 substantially continuously throughout operation of system 100, where such data includes various types of sensor data (e.g., for blinking pattern detection), control parameters, and/or other data.

The orientation sensor 128 may be implemented as one or more of a compass, float, accelerometer, and/or other device capable of measuring an orientation of UAV 106 (e.g., magnitude and direction of roll, pitch, and/or yaw, relative to one or more reference orientations such as gravity and/or Magnetic North), gimbal system 112, imaging system/sensor payload 114, and/or other elements of system 100, and providing such measurements as sensor signals and/or data that may be communicated to various devices of system 100. In some cases, a yaw and/or position of UAV 106 may be adjusted to better position/orient UAV 106 to align with a target location based on a fiduciary marker associated with the target location. The gyroscope/accelerometer 132 may be implemented as one or more electronic sextants, semiconductor devices, integrated chips, accelerometer sensors, accelerometer sensor systems, or other devices capable of measuring angular velocities/accelerations and/or linear accelerations (e.g., direction and magnitude) of UAV 106 and/or other elements of system 100 and providing such measurements as sensor signals and/or data that may be communicated to other devices of system 100 (e.g., user interface 118, logic device 126, logic device 150). The GNSS 134 may be implemented according to any global navigation satellite system, including a GPS, GLONASS, and/or Galileo based receiver and/or other device capable of determining absolute and/or relative position of UAV 106 (e.g., or an element of UAV 106) based on wireless signals received from space-bom and/or terrestrial sources (e.g., eLoran, and/or other at least partially terrestrial systems), for example, and capable of providing such measurements as sensor signals and/or data (e.g., coordinates) that may be communicated to various devices of system 100. In some embodiments, the GNSS 134 may include an altimeter, for example, or may be used to provide an absolute altitude.

The communication system 136 may be implemented as any wired and/or wireless communications module configured to transmit and receive analog and/or digital signals between elements of system 100. For example, the communication system 136 may be configured to receive flight control signals and/or data from base station 146 and provide them to logic device 126 and/or propulsion system 124. In other embodiments, the communication system 136 may be configured to receive images and/or other sensor information (e.g., visible spectrum and/or infrared still images or video images) from the sensor payload 114 and relay the sensor data to logic device 126 and/or base station 146. In some embodiments, the communication system 136 may be configured to support spread spectrum transmissions, for example, and/or multiple simultaneous communications channels between elements of system 100. Wireless communication links may include one or more analog and/or digital radio communication links, such as WiFi and others, as described herein, and may be direct communication links established between elements of system 100, for example, or may be relayed through one or more wireless relay stations configured to receive and retransmit wireless communications. Communication links established by the communication system 136 may be configured to transmit data between elements of system 100 substantially continuously throughout operation of system 100, where such data includes various types of sensor data, control parameters, and/or other data.

The gimbal system 112 may be implemented as an actuated gimbal mount, for example, that may be controlled by logic device 126 to stabilize the sensor payload 114 relative to a target (e.g., a target location) or to aim the sensor payload 114 or components coupled thereto according to a desired direction and/or relative orientation or position. As such, the gimbal system 112 may be configured to provide a relative orientation of the sensor payload 114 (e.g., relative to an orientation of UAV 106) to logic device 126 and/or communication system 136 (e.g., gimbal system 112 may include its own orientation sensor 128). In other embodiments, the gimbal system 112 may be implemented as a gravity driven mount (e.g., non-actuated). In various embodiments, the gimbal system 112 may be configured to provide power, support wired communications, and/or otherwise facilitate operation of articulated the sensor/sensor payload 114. In further embodiments, the gimbal system 112 may be configured to couple to a laser pointer, range finder, and/or other device, for example, to support, stabilize, power, and/or aim multiple devices (e.g., the sensor payload 114 and one or more other devices) substantially simultaneously.

In some embodiments, the gimbal system 112 may be adapted to rotate the sensor payload 114 ± 90 degrees, or up to 360 degrees, in a vertical plane relative to an orientation and/or position of UAV 106. In further embodiments, the gimbal system 112 may rotate the sensor payload 114 to be parallel to a longitudinal axis or a lateral axis of UAV 106 as UAV 106 yaws, which may provide 360 degree ranging and/or imaging in a horizontal plane relative to UAV 106. In various embodiments, logic device 126 may be configured to monitor an orientation of gimbal system 112 and/or sensor payload 114 relative to UAV 106, for example, or an absolute or relative orientation of an element of sensor payload 114. Such orientation data may be transmitted to other elements of system 100 for monitoring, storage, or further processing, as described herein.

The propulsion system 124 may be implemented as one or more propellers, rotors, turbines, or other thrust-based propulsion systems, and/or other types of propulsion systems that can be used to provide motive force and/or lift to UAV 106 and/or to steer UAV 106. In some embodiments, the propulsion system 124 may include multiple propellers (e.g., a tri, quad, hex, oct, or other type "copter") that can be controlled (e.g., by logic device 126 and/or the logic device 150) to provide lift and motion for UAV 106 and to provide an orientation for UAV 106. In other embodiments, the propulsion system 124 may be configured primarily to provide thrust while other structures of UAV 106 provide lift, such as in a fixed wing embodiment (e.g., where wings provide the lift) and/or an aerostat embodiment (e.g., balloons, airships, hybrid aerostats). In various embodiments, the propulsion system 124 may be implemented with a portable power supply, such as a battery and/or a combustion engine/generator and fuel supply.

Other modules 140 may include other and/or additional sensors, actuators, communications modules/nodes, and/or user interface devices, for example, and may be used to provide additional environmental information related to operation of UAV 106, for example. In some embodiments, other modules 140 may include a humidity sensor, a wind and/or water temperature sensor, a barometer, an altimeter, a radar system, a proximity sensor, a visible spectrum camera or infrared camera (with an additional mount), an irradiance detector, and/or other environmental sensors providing measurements and/or other sensor signals that can be displayed to a user and/or used by other devices of system 100 (e.g., logic device 126) to provide operational control of UAV 106 and/or system 100.

In some embodiments, other modules 140 may include one or more actuated and/or articulated devices (e.g., light emitting devices (e.g., light emitting diodes), multi-spectrum active illuminators, visible and/or IR cameras, radars, sonars, and/or other actuated devices) coupled to UAV 106, where each actuated device includes one or more actuators adapted to adjust an orientation of the device, relative to UAV 106, in response to one or more control signals (e.g., provided by logic device 126). In particular, other modules 140 may include a stereo vision system configured to provide image data that may be used to calculate or estimate a position of UAV 106, for example, or to calculate or estimate a relative position of a navigational hazard in proximity to UAV 106. In various embodiments, logic device 126 may be configured to use such proximity and/or position information to help safely pilot UAV 106 and/or monitor communication link quality, as described herein.

The user interface 118 of base station 146 may be implemented as one or more of a display, a touch screen, a keyboard, a mouse, a joystick, a knob, a steering wheel, a yoke, and/or any other device capable of accepting user input and/or providing feedback to a user. In various embodiments, the user interface 118 may be adapted to provide user input (e.g., as a type of signal and/or sensor information transmitted by the communication system 148 of base station 146) to other devices of system 100, such as the logic device126. The user interface 118 may also be implemented with logic device 150 (e.g., similar to logic device 126), which may be adapted to store and/or execute instructions, such as software instructions, implementing any of the various processes and/or methods described herein. For example, the user interface 118 may be adapted to form communication links and transmit and/or receive communications (e.g., infrared images and/or other sensor signals, control signals, sensor information, user input, and/or other information), for example, or to perform various other processes and/or methods described herein (e.g., via logic device 150).

In one embodiment, the user interface 118 may be adapted to display a time series of various sensor information and/or other parameters as part of or overlaid on a graph or map, which may be referenced to a position and/or orientation of UAV 106 and/or other elements of system 100. For example, the user interface 118 may be adapted to display a time series of positions, headings, and/or orientations of UAV 106 and/or other elements of system 100 overlaid on a geographical map, which may include one or more graphs indicating a corresponding time series of actuator control signals, sensor information, and/or other sensor and/or control signals.

In some embodiments, the user interface 118 may be adapted to accept user input including a user-defined target heading, waypoint, route, and/or orientation for an element of system 100, for example, and to generate control signals to cause UAV 106 to move according to the target heading, route, and/or orientation, or to aim the sensor payload 114 accordingly. In other embodiments, the user interface 118 may be adapted to accept user input modifying a control loop parameter of logic device 126, for example. In further embodiments, the user interface 118 may be adapted to accept user input including a user-defined target attitude, orientation, and/or position for an actuated or articulated device (e.g., the sensor payload 114) associated with UAV 106, for example, and to generate control signals for adjusting an orientation and/or position of the actuated device according to the target altitude, orientation, and/or position. Such control signals may be transmitted to logic device 126 (e.g., using the communication system 148 and 136), which may then control UAV 106 accordingly.

The communication system 148 may be implemented as any wired and/or wireless communications module configured to transmit and receive analog and/or digital signals between elements of system 100. For example, the communication system 148 may be configured to transmit flight control signals from the user interface 118 to communication system 136 or 164. In other embodiments, the communication system 148 may be configured to receive sensor data (e.g., visible spectrum and/or infrared still images or video images, or other sensor data) from the sensor payload 114. In some embodiments, the communication system 148 may be configured to support spread spectrum transmissions, for example, and/or multiple simultaneous communications channels between elements of system 100. In various embodiments, the communication system 148 may be configured to monitor the status of a communication link established between base station 146, the sensor payload 114, and/or UAV 106 (e.g., including packet loss of transmitted and received data between elements of system 100, such as with digital communication links), as described herein. Such status information may be provided to the user interface 118, for example, or transmitted to other elements of system 100 for monitoring, storage, or further processing.

Other modules 152 of base station 146 may include other and/or additional sensors, actuators, communications modules/nodes, and/or user interface devices used to provide additional environmental information associated with base station 146, for example. In some embodiments, other modules 152 may include a humidity sensor, a wind and/or water temperature sensor, a barometer, a radar system, a visible spectrum camera, an infrared camera, a GNSS, and/or other environmental sensors providing measurements and/or other sensor signals that can be displayed to a user and/or used by other devices of system 100 (e.g., logic device 126) to provide operational control of UAV 106 and/or system 100 or to process sensor data to compensate for environmental conditions, such as an water content in the atmosphere approximately at the same altitude and/or within the same area as UAV 106 and/or base station 146, for example. In some embodiments, other modules 152 may include one or more actuated and/or articulated devices (e.g., multi-spectrum active illuminators, visible and/or IR cameras, radars, sonars, and/or other actuated devices), where each actuated device includes one or more actuators adapted to adjust an orientation of the device in response to one or more control signals (e.g., provided by the user interface 118).

In embodiments where the imaging system/sensor payload 114 is implemented as an imaging device, the imaging system/sensor payload 114 may include an imaging module 160, which may be implemented as a cooled and/or uncooled array of detector elements, such as visible spectrum and/or infrared sensitive detector elements, including quantum well infrared photodetector elements, bolometer or microbolometer based detector elements, type II superlattice based detector elements, and/or other infrared spectrum detector elements that can be arranged in a focal plane array. In various embodiments, the imaging module 160 may include one or more logic devices (e.g., similar to logic device 126) that can be configured to process imagery captured by detector elements of the imaging module 160 before providing the imagery to a memory 162 or a communication system 164. More generally, the imaging module 160 may be configured to perform any of the operations or methods described herein, at least in part, or in combination with logic device 126 and/or user interface 118.

In some embodiments, the sensor payload 114 may be implemented with a second or additional imaging modules similar to the imaging module 160, for example, that may include detector elements configured to detect other electromagnetic spectrums, such as visible light, ultraviolet, and/or other electromagnetic spectrums or subsets of such spectrums. In various embodiments, such additional imaging modules may be calibrated or registered to the imaging module 160 such that images captured by each imaging module occupy a known and at least partially overlapping field of view of the other imaging modules, thereby allowing different spectrum images to be geometrically registered to each other (e.g., by scaling and/or positioning). In some embodiments, different spectrum images may be registered to each other using pattern recognition processing in addition or as an alternative to reliance on a known overlapping field of view.

The communication system 164 of the sensor payload 114 may be implemented as any wired and/or wireless communications module configured to transmit and receive analog and/or digital signals between elements of system 100. For example, the communication system 164 may be configured to transmit infrared images from the imaging module 160 to communication system 136 or 148. In other embodiments, the communication system 164 may be configured to receive control signals (e.g., control signals directing capture, focus, selective filtering, and/or other operation of sensor payload 114) from logic device 126 and/or user interface 118. In some embodiments, communication system 164 may be configured to support spread spectrum transmissions, for example, and/or multiple simultaneous communications channels between elements of system 100. In various embodiments, the communication system 164 may be configured to monitor and communicate the status of an orientation of the sensor payload 114 as described herein. Such status information may be provided or transmitted to other elements of system 100 for monitoring, storage, or further processing.

The memory 162 may be implemented as one or more machine readable mediums and/or logic devices configured to store software instructions, sensor signals, control signals, operational parameters, calibration parameters, infrared images, and/or other data facilitating operation of system 100, for example, and provide it to various elements of system 100. The memory 162 may also be implemented, at least in part, as removable memory, such as a secure digital memory card for example including an interface for such memory.

An orientation sensor 170 of the sensor payload 114 may be implemented similar to the orientation sensor 128 or gyroscope/ accelerometer 132, and/or any other device capable of measuring an orientation of the sensor payload 114, the imaging module 160, and/or other elements of the sensor payload 114 (e.g., magnitude and direction of roll, pitch, and/or yaw, relative to one or more reference orientations such as gravity, Magnetic North, and/or an orientation of UAV 106) and providing such measurements as sensor signals that may be communicated to various devices of system 100. A gyroscope/accelerometer (e.g., angular motion sensor) 172 of the sensor payload 114 may be implemented as one or more electronic sextants, semiconductor devices, integrated chips, accelerometer sensors, accelerometer sensor systems, or other devices capable of measuring angular velocities/accelerations (e.g., angular motion) and/or linear accelerations (e.g., direction and magnitude) of the sensor payload 114 and/or various elements of the sensor payload 114 and providing such measurements as sensor signals that may be communicated to various devices of system 100.

Other modules 176 of the sensor payload 114 may include other and/or additional sensors, actuators, communications modules/nodes, cooled or uncooled optical filters, and/or user interface devices used to provide additional environmental information associated with the sensor payload 114, for example. In some embodiments, other modules 176 may include a humidity sensor, a wind and/or water temperature sensor, a barometer, a radar system, a visible spectrum camera, an infrared camera, a GNSS, and/or other environmental sensors providing measurements and/or other sensor signals that can be displayed to a user and/or used by the imaging module 160 or other devices of system 100 (e.g., logic device 126) to provide operational control of UAV 106 and/or system 100 or to process imagery to compensate for environmental conditions.

With continued reference to FIG. 1A, landing platform 108 may include various components to facilitate the operation of landing platform 108, including communications (e.g., with UAV 106 and/or base station 146, etc.), controlling various components and tests, and receiving and processing sensor data. In embodiments, landing platform 108 includes a power supply 180, a controller 182, an input/output (I/O) component 184, communications components 186, platform logic 188, one or more motor drivers 190, and one or more sensors 192, or any combination thereof.

Power supply 180 may be any power supply suitable to power landing platform 108 or components thereof. For instance, power supply 180 may include one or more batteries or other power supply components. In embodiments, landing platform 108 may be plugged into a power outlet or hardwired to a facility's electrical system or to a vehicle's electrical system to charge the batteries and/or power landing platform 108.

Controller 182 may be implemented as one or more microprocessors, microcontrollers, application specific integrated circuits (ASICs), programmable logic devices (PLDs) (e.g., field programmable gate arrays (FPGAs), complex programmable logic devices (CPLDs), field programmable systems on a chip (FPSCs), or other types of programmable devices), or other processing devices used to control the operations of landing platform 108.

I/O component 184 may process user action, such as selecting keys from a keypad/keyboard and/or selecting one or more buttons, images, or links, such as for inputting or accessing/requesting data, and sends a corresponding signal to controller 182. I/O component 184 may also include an output component, such as a display control and a cursor control (such as a keyboard, keypad, mouse, etc.). I/O component 184 may include an optional audio/visual component to allow a user to use voice for inputting information by converting audio signals and/or input or record images/videos by capturing visual data. I/O component 184 may allow the user to hear audio and view images/video.

Communications components 186 may include wired and/or wireless interfaces. Wired interfaces may include communications links with various platform components and may be implemented as one or more physical networks or device connect interfaces (e.g., Ethernet, and/or other protocols). Wireless interfaces may be implemented as one or more Wi-Fi, Bluetooth, cellular, infrared, radio, and/or other types of network interfaces for wireless communications and may facilitate communications with wireless devices of landing platform 108, UAV 106, base station 146, and/or other component or system.

Platform logic 188 may be implemented as circuitry and/or a machine-readable medium storing various machine-readable instructions and data. For example, in some embodiments, platform logic 188 may store an operating system and one or more applications as machine readable instructions that may be read and executed by controller 182 to perform various operations described herein. In some embodiments, platform logic 188 may be implemented as non-volatile memory (e.g., flash memory, hard drive, solid state drive, or other non-transitory machine-readable mediums), volatile memory, or combinations thereof. Platform logic 188 may include status, configuration and control features which may include various control features disclosed herein. In some embodiments, platform logic 188 executes one or more tests or calibrations to be performed on landing platform 108, as described above. Status information of the tests, calibration specific values, and other information may be displayed to the user during production.

The one or more motor drivers 190 may control one or more motors of landing platform 108, such as an actuator or motor to control movement of various components of landing platform 108, as described herein. The one or more sensors 192 may include sensors for detecting calibration values, platform position, etc.

In general, each of the elements of system 100 may be implemented with any appropriate logic device (e.g., processing device, microcontroller, processor, application specific integrated circuit (ASIC), field programmable gate array (FPGA), memory storage device, memory reader, or other device or combinations of devices) that may be adapted to execute, store, and/or receive appropriate instructions, such as software instructions implementing a method for providing sensor data and/or imagery, for example, or for transmitting and/or receiving communications, such as sensor signals, sensor information, and/or control signals, between one or more devices of system 100. In addition, one or more non-transitory mediums may be provided for storing machine readable instructions for loading into and execution by any logic device implemented with one or more of the devices of system 100. In these and other embodiments, the logic devices may be implemented with other components where appropriate, such as volatile memory, non-volatile memory, and/or one or more interfaces (e.g., inter-integrated circuit (I2C) interfaces, mobile industry processor interfaces (MIPI), joint test action group (JTAG) interfaces (e.g., IEEE 1149.1 standard test access port and boundary-scan architecture), and/or other interfaces, such as an interface for one or more antennas, or an interface for a particular type of sensor).

Sensor signals, control signals, and other signals may be communicated among elements of system 100 using a variety of wired and/or wireless communication techniques, including voltage signaling, Ethernet, WiFi, Bluetooth, Zigbee, Xbee, Micronet, or other medium and/or short range wired and/or wireless networking protocols and/or implementations, for example. In such embodiments, each element of system 100 may include one or more modules supporting wired, wireless, and/or a combination of wired and wireless communication techniques. In some embodiments, various elements or portions of elements of system 100 may be integrated with each other, for example, or may be integrated onto a single printed circuit board (PCB) to reduce system complexity, manufacturing costs, power requirements, coordinate frame errors, and/or timing errors between the various sensor measurements. Each element of system 100 may include one or more batteries, capacitors, or other electrical power storage devices, for example, and may include one or more solar cell modules or other electrical power generating devices. In some embodiments, one or more of the devices may be powered by a power source for UAV 106, using one or more power leads. Such power leads may also be used to support one or more communication techniques between elements of system 100.

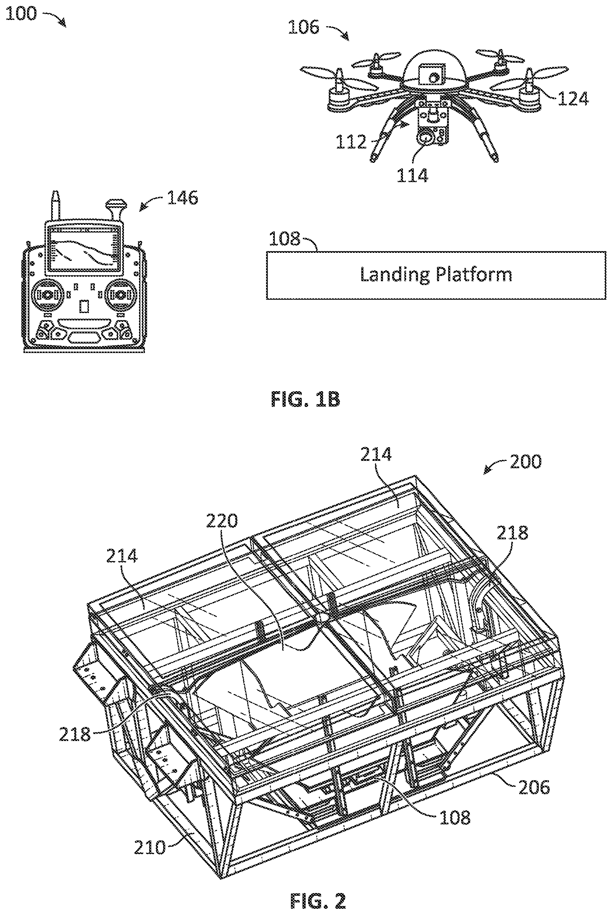

Fig. 1B illustrates a diagram of system 100 in accordance with one or more embodiments of the present disclosure. In some embodiments, base station 146 may be configured to control motion, position, and/or orientation of UAV 106 and/or sensor payloads 114. Further, base station 146 may be configured to control operation of landing platform 108 in some embodiments. In various embodiments, UAV 106 may be configured to control an operation of landing platform 108 such that UAV 106 may automate a landing procedure as discussed herein. Generally, system 100 may include any number of UAVs, landing platforms, and base stations.

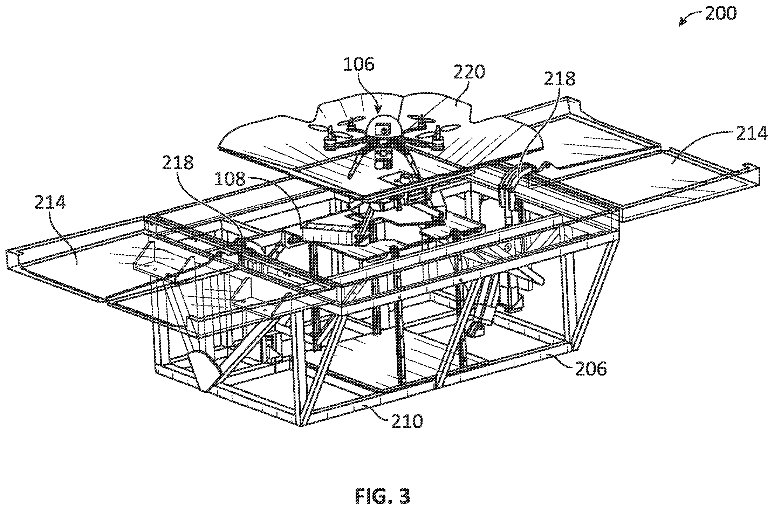

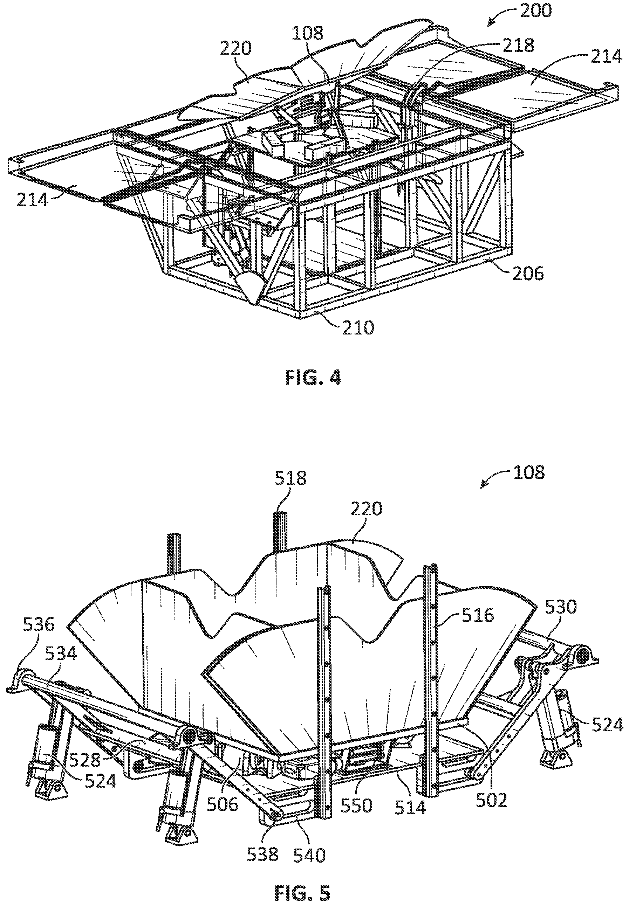

FIG. 2 illustrates a UAV landing/launch system 200 in a closed configuration, with portions of system 200 shown transparent for illustration purposes, in accordance with one or more embodiments of the present disclosure. FIG. 3 illustrates system 200 in an open configuration, with portions of system 200 shown transparent for illustration purposes, in accordance with one or more embodiments of the present disclosure. FIG. 4 illustrates system 200 in the open configuration and adapted to compensate for an off-angle orientation of the system 200, in accordance with one or more embodiments of the present disclosure. Referring to FIGS. 2-4, UAV 106 may be raised and lowered out of a container 206, the container 206 adapted to store UAV 106 between missions and/or protect UAV 106 from the environment. For example, landing platform 108 may be secured within container 206. As detailed more fully below, at least a portion of landing platform 108 may be raisable from container 206 to a launch position via a lift mechanism. As illustrated in FIG. 4, system 200 may allow landing platform 108 to be manipulated at any angle to keep landing platform 108 at a desired orientation, such as at an orientation required for UAV 106 to launch/land. Such embodiments may compensate for off-angle orientations of container 206, such as in embodiments where container 206 is mounted to a vehicle, such as a ground-based vehicle (e.g., automobile or truck), a watercraft, an aircraft/spacecraft, or other type of vehicle.

As illustrated in FIGS. 2-4, container 206 may include a frame 210 and one or more doors 214. For illustration purposes, doors 214 are illustrated transparent to illustrate other features of system 200. Frame 210 may provide a support structure to mount landing platform 108 within container 206 and/or mount container 206 (e.g., to a vehicle). As illustrated in FIG. 2, the one or more doors 214 may be closed to, for example, secure landing platform 108 in container 206 and/or protect landing platform 108 from the environment. As illustrated in FIGS. 2-3, the one or more doors 214 may be opened to, for example, allow raising of landing platform 108 to a launch position. In embodiments, raising landing platform 108 may cause door(s) 214 to automatically open, such as via an arm 218 securing door(s) 214 to landing platform 108. Lowering landing platform 108 into container 206 may cause door(s) 214 to automatically close, such as via arm 218.

Referring to FIG. 2, landing platform 108 is configurable to allow platform storage of landing platform 108 within container 206. Landing platform 108 includes folding elements 220 allowing landing platform 108 to fold up into a smaller size to be stowed in container 206. Referring to FIGS. 3-4, the folding elements 220 are unfolded when landing platform 108 is raised from container 206, such as to provide a larger landing platform for UAV 106. In embodiments, folding elements 220 are adapted to position UAV 106 on landing platform 108. For example, at least a portion of folding elements 220, when in a closed position, may be adapted to trap on a feature of UAV 106 to hold UAV 106 in place.

Landing platform 108 may include other configurations, including articulating or moving elements that selectively collapse or close to engage UAV 106 and/or fit landing platform 108 within container 206, and selectively expand or open to facilitate UAV take-off and/or landing.

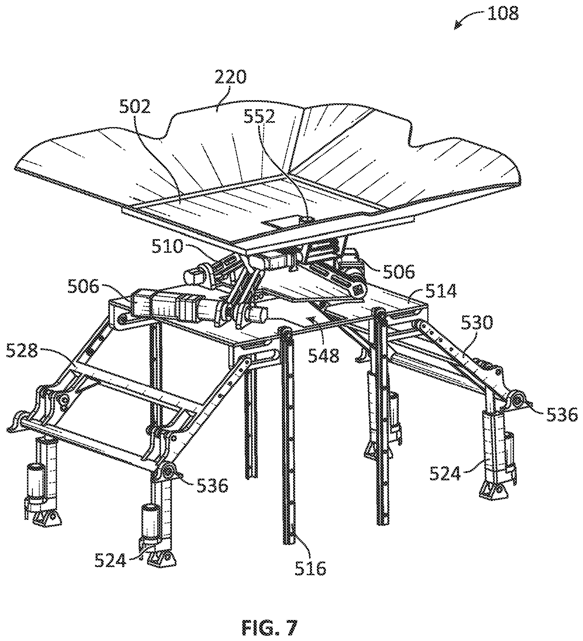

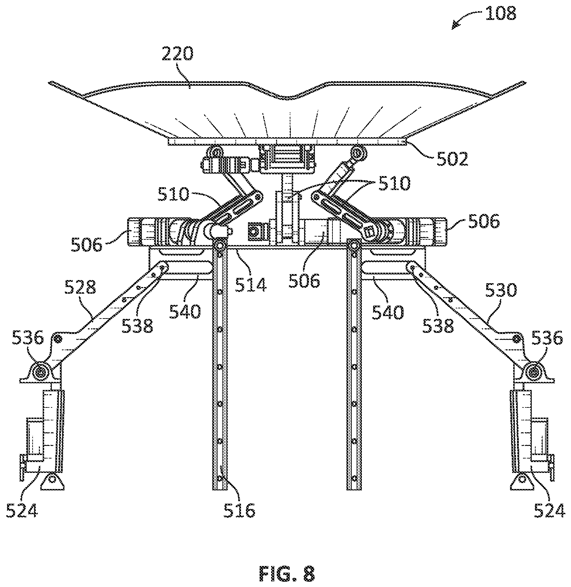

FIGS. 5-9 illustrate various views of landing platform 108 with container 206 removed for illustration purposes, in accordance with one or more embodiments of the present disclosure. As shown, landing platform 108 includes a support plate 502 adapted to support UAV 106, folding elements 220 adapted to position UAV 106 on support plate 502, and one or more motors 506. Support plate 502 may be a flat plate providing a landing surface for UAV 106. Folding elements 220 are pivotably coupled to support plate 502 to move between closed and open positions. The closed position of folding elements 220 (see FIGS. 5-6) may secure UAV 106. For example, at least a portion of folding elements 220, when in the closed position, may be adapted to trap on a feature of UAV 106 to hold UAV 106 in place on support plate 502. The open position of folding elements 220 (see FIGS. 7-9) allows UAV 106 to launch from and/or land on support plate 502. For example, when opened, folding elements 220 may clear UAV 106.

The one or more motors 506 are configured to align support plate 502 at a desired orientation. The one or more motors 506 are configured to align support plate 502 with a horizon based on a detected orientation of support plate 502. For example, motor(s) 506 may align support plate 502 even with the horizon to account for off-angle mounting and/or positioning of container 206/landing platform 108. Such embodiments may allow proper positioning of support plate 502 when an associated vehicle is oriented off-angle, which may include a vehicle of any type being off-angle with respect to the horizon whether on land (e.g., a ground vehicle on uneven or off-angle terrain), in the water (e.g., a listing boat), and/or in the air/space (e.g., an airplane due to roll and/or pitch angles), for instance. Depending on the application, landing platform 108 may include a plurality of motors 506 (e.g., three motors 506), although other configurations are contemplated. As illustrated in FIGS. 7-9, an articulating arm assembly 510 may couple each motor of the one or more motors 506 to support plate 502 to facilitate angular positioning of support plate 502 by motors 506.

As illustrated in FIGS. 5-9, landing platform 108 may include a base plate 514. The one or more motors 506 may be mounted to base plate 514 to control a position of support plate 502 relative to base plate 514. As shown, base plate 514 may be slidably coupled to a linear track 516. Linear track 516 may be defined by one or more track elements 518 (e.g., four track elements 518) limiting movement of base plate 514 to along a single axis (e.g., a vertical axis relative to container 206 to raise/lower landing platform 108 in container 206). Base plate 514 may be coupled to linear track 516 by a linear bearing or a carriage bearing. Linear track 516 (e.g., track elements 518) may be mounted to container 206. In other examples, the one or more motors may be configured to drive two or more threaded rods, thus enabling control over unwanted lateral movement of the base plate, the one or more motors may be configured to drive a scissor lift or similar apparatus having cross-balance supports, and/or the one or more motors may be configured to operate another assembly configured to adjust the base plate as described herein.

In embodiments, landing platform 108 may include one or more actuators 524 configured to slide base plate 514 along linear track 516. For example, one end of each actuator may be secured to container 206 (e.g., to frame 210 via a mounting block) and the opposing, actuating end of each actuator may be coupled to base plate 514 (either directly or via one or more elements). In embodiments, a first lift arm 528 may couple a first set of actuators (e.g., a first pair of actuators 524) to base plate 514, and a second lift arm 530 may couple a second set of actuators (e.g., a second pair of actuators 524) to base plate 514. A first end 534 of each of first lift arm 528 and second lift arm 530 may be secured to container 206 (e.g., to frame 210 via a mount 536) and an opposing second end 538 of first lift arm 528 and second lift arm 530 may be coupled to base plate 514 (e.g., via a carriage 540). Each actuator 524 may be a linear actuator, although other configurations are contemplated.

Landing platform 108 may include other features. For example, landing platform 108 may include a tether system 550 including a tether guide 552. Tether system 550 may facilitate tethered flight of UAV 106, with tether guide 552 facilitating extension/retraction of a tether connected to UAV 106. In embodiments, landing platform 108 may include one or more sensors configured to detect an orientation of support plate 502 (e.g., relative to the horizon). In embodiments, landing platform 108 may include a control system (e.g., controller 182) configured to control operation of landing platform 108. For example, controller 182 may detect the orientation of support plate 502 and control the one or more motors 506 to align support plate 502 (e.g., with the horizon) based on the detected orientation of support plate 502.

With continued reference to FIGS. 5-9, operation of landing platform 108 will now be discussed. As disclosed herein, landing platform 108 may be secured within container 206 and movable between a stowed position and a launch position via a lift mechanism. FIG. 5 illustrates landing platform 108 in the stowed position, in accordance with one or more embodiments of the present disclosure. As illustrated, actuators 524 may be collapsed such that base plate 514 is in a lowered position (e.g., a lowermost vertical position within container 206). For example, first lift arm 528 and second lift arm 530 may be positioned via retraction or collapsing of actuators 524 to lower second end 538 of first lift arm 528 and second lift arm 530 adjacent a bottom of container 206. Actuators 524 may be collapsed or retracted evenly to maintain a level position of base plate 514, such as parallel to the bottom of container 206 and/or perpendicular to linear track 516 to limit binding. Motors 506 may be actuated to collapse support plate 502 to a lowered position (e.g., a lowermost position near base plate 514). For example, motors 506 may be actuated to collapse (e.g., fully collapse) each articulating arm assembly 510. In embodiments, base plate 514 may include one or more cutouts 548 to accommodate articulating arm assemblies 510 in the lowermost position. Support plate 502 may extend parallel to base plate 514 in the stowed position. As shown, folding elements 220 may be folded or otherwise collapsed to allow positioning of landing platform 108 in container 206. Folding or collapsing of folding elements 220 may secure UAV 106 to landing platform 108, such as a portion of folding elements 220 trapping or engaging a portion of UAV 106.

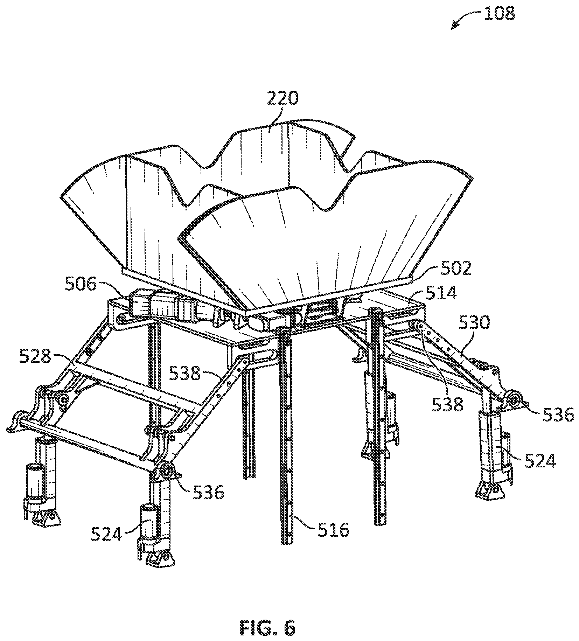

FIG. 6 illustrates landing platform 108 raised to the launch position with folding elements 220 collapsed/folded, in accordance with one or more embodiments of the present disclosure. As illustrated, actuators 524 may be extended to raise base plate 514 to a raised position (e.g., an uppermost vertical position within container 206). For example, first lift arm 528 and second lift arm 530 may be positioned via extension of actuators 524 to raise second end 538 of first lift arm 528 and second lift arm 530 (e.g., via rotation of first lift arm 528 and second lift arm 530 about mount 536). Actuators 524 may be extended evenly to maintain level position of base plate 514 (e.g., to limit binding of base plate 514 along linear track 516). Raising base plate 514 via actuators 524 may cause base plate 514 to slide along linear track 516 and second end 538 of first lift arm 528/second lift arm 530 to slide along carriage 540.

FIGS. 7-8 illustrate landing platform 108 raised to the launch position with folding elements 220 deployed/unfolded, in accordance with one or more embodiments of the present disclosure. As illustrated, movement of landing platform 108 from the stowed position to the launch position may deploy folding elements 220 from the closed position to the open position. Similarly, movement of landing platform 108 from the launch position to the stowed position may collapse the folding elements 220 from the open position to the closed position. For instance, motors 506 may be actuated to raise support plate 502 away from base plate 514 (e.g., to a raised position). In embodiments, motors 506 may be actuated to articulate one or more articulating arm assemblies 510 to cause movement of support plate 502 relative to base plate 514. As shown, motors 506 may be actuated evenly to raise support plate 502 parallel to base plate 514. Raising of base plate 514 and/or raising of support plate 502 relative to base plate 514 may deploy folding elements 220, such as automatically, as folding elements 220 clear container 206/doors 214. Conversely, lowering of base plate 514 and/or lowering of support plate 502 towards base plate 514 may collapse folding elements 220, such as automatically.

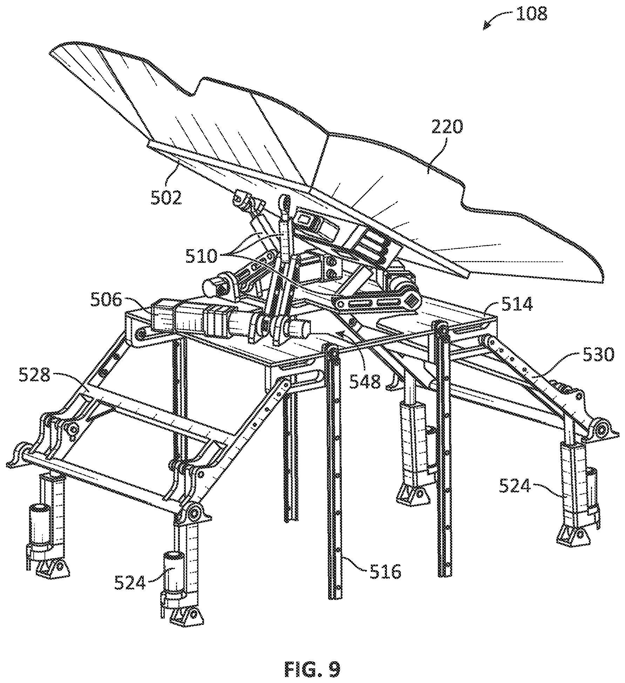

FIG. 9 illustrates landing platform 108 raised to the launch position, folding elements 220 deployed, and support plate 502 angled relative to base plate 514, in accordance with one or more embodiments of the present disclosure. As illustrated, motors 506 may be actuated unevenly to position support plate 502 at a non-parallel angle to base plate 514. In this manner, support plate 502 may be manipulated to substantially any mechanically-allowable angle to position support plate 502 at a desired orientation. Such embodiments may be useful to compensate for off-angle orientations of container 206/landing platform 108. For example, mounting container 206 on a vehicle may cause container 206 to be positioned off-angle relative to the horizon, such as due to the mounting itself or positioning of vehicle with respect to the horizon (e.g., a ground-based vehicle on uneven or off-angle terrain, a water/air/space vehicle oriented off-angle relative to the horizon, etc.). In such embodiments, support plate 502 may be angled relative to base plate 514 via motors 506 and articulating arm assemblies 510 to maintain a level or near-level alignment of support plate 502 with the horizon.

Lowering landing platform 108 from the launch position to the stowed position may be accomplished via a reverse order of operations. For example, motors 506 may be actuated to collapse support plate 502 to base plate 514, and actuators 524 may be actuated to lower base plate 514 along linear track 516 and into container 206. Collapsing support plate 502 to base plate 514 and/or lowering of base plate 514 into container 206 may collapse folding elements 220, such as automatically as folding elements 220 engage container 206/doors 214. As noted above, lowering of landing platform 108 into container 206 may cause doors 214 to close, such as via arm 218. Alternatively, one or more actuators/motors may open or close doors 214 based on position of landing platform 108 and/or an executable control.

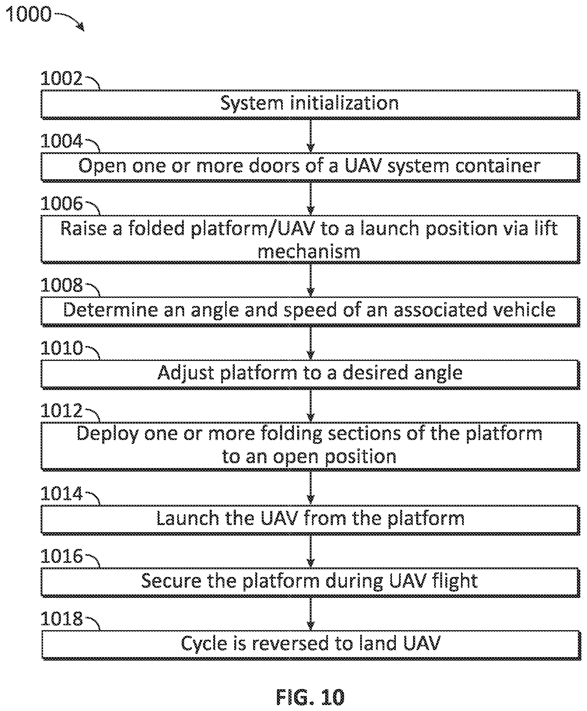

FIG. 10 illustrates a flow diagram of a process 1000 for positioning a UAV landing platform, in accordance with one or more embodiments of the present disclosure. For explanatory purposes, process 1000 is described with reference to FIGS. 1-9. Note that one or more operations in FIG. 10 may be combined, omitted, and/or performed in a different order as desired. According to various embodiments, process 1000 may be performed by a logic device, such as logic device 126 of UAV 106, controller 182 of landing platform 108, the logic device 150 for base station 146, or a combination of the aforementioned logic devices, which may be communicatively coupled to execute the operations of process 1000.

In block 1002, process 1000 includes system initialization. For example, one or more sensors, controls, or modules of a UAV system may be initialized for operation. Data may be received from various elements of the UAV system to determine a status of the UAV system, or subsystems thereof. In embodiments, one or more systems of UAV system may be reset. A notification may be generated for the user, such as to provide an indication of the status of UAV system, among other notifications.

In block 1004, process 1000 includes opening one or more doors of a container of the UAV system. The container may house a platform for a UAV. Opening the doors of the container may allow raising of the platform to a launch position, as detailed above.

In block 1006, process 1000 includes raising a folded platform to a launch position via a lift mechanism. For example, once doors are opened sufficiently, the folded platform/UAV may be raised via one or more linear actuators, such as in a manner as described above.

In block 1008, process 1000 includes determining an angle and a speed of an associated vehicle. For example, an angle and speed of the vehicle relative to the horizon may be determined, such as via one or more sensors of the vehicle, UAV system, or other devices.

In block 1010, process 1000 includes adjusting the platform to a desired angle. For instance, the platform may be adjusted level with the horizon via one or more electric motors and/or other devices (e.g., articulating arm assemblies). In embodiments, the platform may be angled to account for an angle of attack of the UAV needed for takeoff.

In block 1012, process 1000 includes deploying one or more folding sections of the platform to an open position. For example, folding elements may be pivotably coupled along edges of platform. The folding elements may deploy, such as automatically, as the elements clear the container or doors. In embodiments, a portion of the folding elements may catch against the container/doors to deploy the folding elements as the platform is raised. In embodiments, one or more associated actuators or motors may deploy the folding elements based on the position of the platform, such as once the platform is raised the folding elements are deployed.

In block 1014, process 1000 includes launching the UAV from the platform. For instance, the UAV positioned on the platform may take off, and once airborne, the UAV may perform various flight maneuvers, as detailed above.

In block 1016, process 1000 includes securing the platform (e.g., in the container) during UAV flight. For example, the platform can be collapsed (e.g., folding the folding elements to a closed position) and lowered to a stowed position (e.g., in the container). In embodiments, block 1016 may include closing the doors of the container. Lowering the platform into the container may fold the folding elements, such as a portion of the folding elements catching against the container/doors to collapse the folding elements. In embodiments, one or more associated actuators or motors may collapse the folding elements as or prior to the platform being lowered into the container.

In block 1018, process 1000 includes reversing the cycle to land UAV on the platform. For example, the platform may be raised from the container, the folding elements deployed, and the platform angularly adjusted to present a landing surface/platform for the UAV. In embodiments, the platform may be angled to account for the angle of attack of the UAV during landing. Once the UAV has landed on the platform, the platform can be folded up and lowered into the container. Once the platform is lowered into the platform, the doors can be closed, and the system powered down or placed in a standby mode. Closing the doors of the container may secure the stored platform/UAV in the container.

Where applicable, various embodiments provided by the present disclosure can be implemented using hardware, software, or combinations of hardware and software. Also, where applicable, the various hardware components and/or software components set forth herein can be combined into composite components comprising software, hardware, and/or both. Where applicable, the various hardware components and/or software components set forth herein can be separated into sub-components comprising software, hardware, or both. In addition, where applicable, it is contemplated that software components can be implemented as hardware components, and vice-versa.

Software in accordance with the present disclosure, such as non-transitory instructions, program code, and/or data, can be stored on one or more non-transitory machine-readable mediums. It is also contemplated that software identified herein can be implemented using one or more general purpose or specific purpose computers and/or computer systems, networked and/or otherwise. Where applicable, the ordering of various steps described herein can be changed, combined into composite steps, and/or separated into sub-steps to provide features described herein.

Embodiments described above illustrate but do not limit the invention. It should also be understood that numerous modifications and variations are possible in accordance with the principles of the present invention. Accordingly, the scope of the invention is defined only by the following claims.

## Claims

1. A system (200) comprising:
a platform (108) adapted for launching and/or landing an unmanned aerial vehicle (106), UAV, the platform comprising:
a support plate (502) adapted to support the UAV;
one or more motors (506) configured to align the support plate with a horizon based on a detected orientation of the support plate; and
folding elements (220) adapted to position the UAV on the support plate, wherein the folding elements are pivotably coupled to the support plate to move between closed and open positions, the closed position holding the UAV to the support plate, the open position allowing the UAV to launch from and/or land on the support plate.

2. The system of claim 1, further comprising:
a base plate (514) slidably coupled to a linear track (516), the one or more motors mounted to the base plate to control a position of the support plate relative to the base plate; and
one or more actuators (524) configured to slide the base plate along the linear track.

3. The system of claim 2, further comprising:
a first lift arm (528) coupling a first set of actuators of the one or more actuators to the base plate; and
a second lift arm (530) coupling a second set of actuators of the one or more actuators to the base plate,
wherein each actuator of the first set of actuators and the second set of actuators is a linear actuator.

4. The system of claim 1, further comprising an articulating arm assembly (510) coupling each motor of the one or more motors to the support plate.

5. The system of claim 1, wherein at least a portion of the folding elements, when in the closed position, is adapted to trap on a feature of the UAV to hold the UAV in place on the support plate.

6. The system of claim 5, further comprising:
a container (206), the platform secured within the container and movable between a launch position and a stowed position via a lift mechanism;
wherein movement of the platform from the stowed position to the launch position deploys the folding elements from the closed position to the open position; and
wherein movement of the platform from the launch position to the stowed position collapses the folding elements from the open position to the closed position.

7. The system of claim 6, further comprising a logic device (126) configured to:
detect the orientation of the support plate relative to the horizon; and
control the one or more motors to align the support plate with the horizon based on the detected orientation of the support plate.

8. A method (1000) comprising:
adjusting (1010) a platform (108) to a desired angle relative to a horizon, the platform adapted for launching and/or landing an unmanned aerial vehicle (106), UAV, from a vehicle and comprising:
a support plate (502) adapted to support the UAV,
one or more motors (506) configured to align the support plate with the desired angle based on a detected orientation of the support plate, and
folding elements (220) adapted to position the UAV on the support plate, wherein the folding elements are pivotably coupled to the support plate to move between closed and open positions, the closed position holding the UAV to the support plate, the open position allowing the UAV to launch from and/or land on the support plate.

9. The method of claim 8, further comprising:
raising (1006) the platform to a launch position via a lift mechanism; and
lowering the platform to a stowed position via the lift mechanism.

10. The method of claim 9, wherein the platform comprises:
a base plate slidably coupled to a linear track, the one or more motors mounted to the base plate to control a position of the support plate relative to the base plate; and
one or more actuators configured to slide the base plate along the linear track.

11. The method of claim 10, wherein the platform further comprises:
a first lift arm coupling a first set of actuators of the one or more actuators to the base plate;
a second lift arm coupling a second set of actuators of the one or more actuators to the base plate, and
an articulating arm assembly coupling each motor of the one or more motors to the support plate;
wherein each actuator of the first set of actuators and the second set of actuators is a linear actuator.

12. The method of claim 9, further comprising:
deploying (1012) one or more folding elements of the platform to the open position, wherein movement of the platform from the stowed position to the launch position deploys the one or more folding elements to the open position; and
folding the one or more folding elements to the closed position, wherein movement of the platform from the launch position to the stowed position folds the one or more folding elements to the closed position.

13. The method of claim 8, wherein:
at least a portion of the one or more folding elements, when in the closed position, is adapted to trap on a feature of the UAV to hold the UAV in place on the support plate.

14. The method of claim 12, further comprising:
opening (1004) one or more doors of a container housing the platform to allow the raising the platform to the launch position; and
closing the one or more doors of the container to secure the stored platform in the container.

15. The method of claim 8, wherein the adjusting the platform comprises:
detecting the orientation of the support plate relative to the horizon; and
controlling the one or more motors to align the support plate with the horizon based on the detected orientation of the support plate.

## Patentansprüche

1. Eine System (200), das Folgendes beinhaltet:
eine Plattform (108), die zum Starten und/oder Landen eines unbemannten Luftfahrzeugs (106), UAV, angepasst ist, wobei die Plattform Folgendes beinhaltet:
eine Tragplatte (502), die zum Tragen des UAV angepasst ist;
einen oder mehrere Motoren (506), die zum Ausrichten der Tragplatte nach einem Horizont auf der Basis einer detektierten Orientierung der Tragplatte konfiguriert sind; und
Faltelemente (220), die zum Positionieren des UAV auf der Tragplatte angepasst sind, wobei die Faltelemente schwenkbar mit der Tragplatte gekoppelt sind, um sich zwischen einer geschlossenen und einer offenen Position zu bewegen,
wobei die geschlossene Position das UAV an der Tragplatte hält, wobei die offene Position dem UAV ermöglicht, von der Tragplatte zu starten und/oder darauf zu landen.

2. System gemäß Anspruch 1, das ferner Folgendes beinhaltet:
eine Basisplatte (514), die verschiebbar mit einer linearen Schiene (516) gekoppelt ist, wobei der eine oder die mehreren Motoren an der Basisplatte montiert sind, um eine Position der Tragplatte relativ zu der Basisplatte zu steuern; und
einen oder mehrere Aktoren (524), die zum Verschieben der Basisplatte entlang der linearen Schiene konfiguriert sind.

3. System gemäß Anspruch 2, das ferner Folgendes beinhaltet:
einen ersten Hubarm (528), der einen ersten Satz Aktoren des einen oder der mehreren Aktoren mit der Basisplatte koppelt; und
einen zweiten Hubarm (530), der einen zweiten Satz Aktoren des einen oder der mehreren Aktoren mit der Basisplatte koppelt,
wobei jeder Aktor des ersten Satzes Aktoren und des zweiten Satzes Aktoren ein Linearaktor ist.

4. System gemäß Anspruch 1, das ferner eine Gelenkarmanordnung (510) beinhaltet, die jeden Motor des einen oder der mehreren Motoren mit der Tragplatte koppelt.

5. System gemäß Anspruch 1, wobei mindestens ein Teil der Faltelemente, wenn sie sich in der geschlossenen Position befinden, zum Einklemmen eines Merkmals des UAV angepasst ist, um das UAV an Ort und Stelle auf der Tragplatte zu halten.

6. System gemäß Anspruch 5, das ferner Folgendes beinhaltet:
einen Behälter (206), wobei die Plattform innerhalb des Behälters gesichert ist und
mittels eines Hubmechanismus zwischen einer Startposition und einer Verstauposition beweglich ist;
wobei die Bewegung der Plattform aus der Verstauposition in die Startposition die Faltelemente aus der geschlossenen Position in die offene Position ausbringt; und
wobei die Bewegung der Plattform aus der Startposition in die Verstauposition die Faltelemente aus der offenen Position in die geschlossene Position zusammenklappt.

7. System gemäß Anspruch 6, das ferner eine Logikvorrichtung (126) beinhaltet, die zu Folgendem konfiguriert ist:
Detektieren der Orientierung der Tragplatte relativ zum Horizont; und
Steuern des einen oder der mehreren Motoren zum Ausrichten der Tragplatte nach dem Horizont auf der Basis der detektierten Orientierung der Tragplatte.

8. Ein Verfahren (1000), das Folgendes beinhaltet:
Einstellen (1010) einer Plattform (108) auf einen gewünschten Winkel relativ zu einem Horizont, wobei die Plattform zum Starten und/oder Landen eines unbemannten Luftfahrzeugs (106), UAV, von einem Fahrzeug angepasst ist und Folgendes beinhaltet:
eine Tragplatte (502), die zum Tragen des UAV angepasst ist,
einen oder mehrere Motoren (506), die zum Ausrichten der Tragplatte nach dem gewünschten Winkel auf der Basis einer detektierten Orientierung der Tragplatte konfiguriert sind, und
Faltelemente (220), die zum Positionieren des UAV auf der Tragplatte angepasst sind, wobei die Faltelemente schwenkbar mit der Tragplatte gekoppelt sind, um sich zwischen einer geschlossenen und einer offenen Position zu bewegen,
wobei die geschlossene Position das UAV an der Tragplatte hält, wobei die offene Position dem UAV ermöglicht, von der Tragplatte zu starten und/oder darauf zu landen.

9. Verfahren gemäß Anspruch 8, das ferner Folgendes beinhaltet:
Anheben (1006) der Plattform mittels eines Hubmechanismus in eine Startposition; und
Absenken der Plattform mittels des Hubmechanismus in eine Verstauposition.

10. Verfahren gemäß Anspruch 9, wobei die Plattform Folgendes beinhaltet:
eine Basisplatte, die verschiebbar mit einer linearen Schiene gekoppelt ist, wobei der eine oder die mehreren Motoren an der Basisplatte montiert sind, um eine Position der Tragplatte relativ zu der Basisplatte zu steuern; und
einen oder mehrere Aktoren, die zum Verschieben der Basisplatte entlang der linearen Schiene konfiguriert sind.

11. Verfahren gemäß Anspruch 10, wobei die Plattform ferner Folgendes beinhaltet:
einen ersten Hubarm, der einen ersten Satz Aktoren des einen oder der mehreren Aktoren mit der Basisplatte koppelt;
einen zweiten Hubarm, der einen zweiten Satz Aktoren des einen oder der mehreren Aktoren mit der Basisplatte koppelt, und
eine Gelenkarmanordnung, die jeden Motor des einen oder der mehreren Motoren mit der Tragplatte koppelt;
wobei jeder Aktor des ersten Satzes Aktoren und des zweiten Satzes Aktoren ein Linearaktor ist.

12. Verfahren gemäß Anspruch 9, das ferner Folgendes beinhaltet:
Ausbringen (1012) eines oder mehrerer Faltelemente der Plattform in die offene Position, wobei die Bewegung der Plattform aus der Verstauposition in die Startposition das eine oder die mehreren Faltelemente in die offene Position ausbringt; und
Falten des einen oder der mehreren Faltelemente in die geschlossene Position, wobei die Bewegung der Plattform aus der Startposition in die Verstauposition das eine oder die mehreren Faltelemente in die geschlossene Position faltet.

13. Verfahren gemäß Anspruch 8, wobei:
mindestens ein Teil des einen oder der mehreren Faltelemente, wenn sie sich in der geschlossenen Position befinden, zum Einklemmen eines Merkmals des UAV angepasst ist, um das UAV an Ort und Stelle auf der Tragplatte zu halten.

14. Verfahren gemäß Anspruch 12, das ferner Folgendes beinhaltet:
Öffnen (1004) einer oder mehrerer Türen eines Behälters, der die Plattform beherbergt, um das Anheben der Plattform in die Startposition zu ermöglichen; und
Schließen der einen oder der mehreren Türen des Behälters, um die verstaute Plattform in dem Behälter zu sichern.

15. Verfahren gemäß Anspruch 8, wobei das Einstellen der Plattform Folgendes beinhaltet:
Detektieren der Orientierung der Tragplatte relativ zum Horizont; und
Steuern des einen oder der mehreren Motoren zum Ausrichten der Tragplatte nach dem Horizont auf der Basis der detektierten Orientierung der Tragplatte.

## Revendications

1. Un système (200) comprenant :
une plate-forme (108) conçue pour le lancement et/ou l'atterrissage d'un véhicule aérien sans pilote (106), UAV, la plate-forme comprenant :
une plaque de support (502) conçue pour supporter l'UAV ;
un ou plusieurs moteurs (506) configurés pour aligner la plaque de support avec un horizon sur la base d'une orientation détectée de la plaque de support ; et
des éléments se pliant (220) conçus pour positionner l'UAV sur la plaque de support, où les éléments se pliant sont couplés de manière pivotante à la plaque de support pour se mouvoir entre des positions fermée et ouverte, la position fermée maintenant l'UAV sur la plaque de support, la position ouverte permettant à l'UAV d'être lancé à partir de la plaque de support et/ou d'atterrir sur la plaque de support.

2. Le système de la revendication 1, comprenant en outre :
une plaque de base (514) couplée de manière glissante à une coulisse linéaire (516),
les un ou plusieurs moteurs étant montés sur la plaque de base pour commander une position de la plaque de support par rapport à la plaque de base ; et
un ou plusieurs actionneurs (524) configurés pour faire glisser la plaque de base le long de la coulisse linéaire.

3. Le système de la revendication 2, comprenant en outre :
un premier bras d'élévation (528) couplant un premier jeu d'actionneurs des un ou plusieurs actionneurs à la plaque de base ; et
un deuxième bras d'élévation (530) couplant un deuxième jeu d'actionneurs des un ou plusieurs actionneurs à la plaque de base,
où chaque actionneur du premier jeu d'actionneurs et du deuxième jeu d'actionneurs est un actionneur linéaire.

4. Le système de la revendication 1, comprenant en outre un ensemble de bras
d'articulation (510) couplant chaque moteur des un ou plusieurs moteurs à la plaque de support.

5. Le système de la revendication 1, où au moins une partie des éléments se pliant, lorsqu'ils sont dans la position fermée, est conçue pour se coincer sur un organe de l'UAV pour maintenir l'UAV en place sur la plaque de support.

6. Le système de la revendication 5, comprenant en outre :
un contenant (206), la plate-forme étant assujettie au sein du contenant et mobile entre une position de lancement et une position rangée par l'intermédiaire d'un mécanisme d'élévation ;
où le mouvement de la plate-forme de la position rangée à la position de lancement déploie les éléments se pliant de la position fermée à la position ouverte ; et
où le mouvement de la plate-forme de la position de lancement à la position rangée affaisse les éléments se pliant de la position ouverte à la position fermée.

7. Le système de la revendication 6, comprenant en outre un dispositif logique (126) configuré pour :
détecter l'orientation de la plaque de support par rapport à l'horizon ; et
commander les un ou plusieurs moteurs pour aligner la plaque de support avec l'horizon sur la base de l'orientation détectée de la plaque de support.

8. Un procédé (1000) comprenant :
le réglage (1010) d'une plate-forme (108) à un angle souhaité par rapport à un horizon, la plate-forme étant conçue pour le lancement et/ou l'atterrissage d'un véhicule aérien sans pilote (106), UAV, à partir d'un véhicule et comprenant :
une plaque de support (502) conçue pour supporter l'UAV,
un ou plusieurs moteurs (506) configurés pour aligner la plaque de support avec l'angle souhaité sur la base d'une orientation détectée de la plaque de support, et
des éléments se pliant (220) conçus pour positionner l'UAV sur la plaque de support, où les éléments se pliant sont couplés de manière pivotante à la plaque de support pour se mouvoir entre des positions fermée et ouverte, la position fermée maintenant l'UAV sur la plaque de support, la position ouverte permettant à l'UAV d'être lancé à partir de la plaque de support et/ou d'atterrir sur la plaque de support.

9. Le procédé de la revendication 8, comprenant en outre :
le levage (1006) de la plate-forme jusqu'à une position de lancement par l'intermédiaire d'un mécanisme d'élévation ; et
l'abaissement de la plate-forme jusqu'à une position rangée par l'intermédiaire du mécanisme d'élévation.

10. Le procédé de la revendication 9, où la plate-forme comprend :
une plaque de base couplée de manière glissante à une coulisse linéaire, les un ou plusieurs moteurs étant montés sur la plaque de base pour commander une position de la plaque de support par rapport à la plaque de base ; et
un ou plusieurs actionneurs configurés pour faire glisser la plaque de base le long de la coulisse linéaire.

11. Le procédé de la revendication 10, où la plate-forme comprend en outre :
un premier bras d'élévation couplant un premier jeu d'actionneurs des un ou plusieurs actionneurs à la plaque de base ;
un deuxième bras d'élévation couplant un deuxième jeu d'actionneurs des un ou plusieurs actionneurs à la plaque de base, et
un ensemble de bras d'articulation couplant chaque moteur des un ou plusieurs moteurs à la plaque de support ;
où chaque actionneur du premier jeu d'actionneurs et du deuxième jeu d'actionneurs est un actionneur linéaire.

12. Le procédé de la revendication 9, comprenant en outre :
le déploiement (1012) d'un ou de plusieurs éléments se pliant de la plate-forme jusqu'à la position ouverte, où le mouvement de la plate-forme de la position rangée à la position de lancement déploie les un ou plusieurs éléments se pliant jusqu'à la position ouverte ; et
le pliage des un ou plusieurs éléments se pliant jusqu'à la position fermée, où le mouvement de la plate-forme de la position de lancement à la position rangée plie les un ou plusieurs éléments se pliant jusqu'à la position fermée.

13. Le procédé de la revendication 8, où :
au moins une partie des un ou plusieurs éléments se pliant, lorsqu'ils sont dans la position fermée, est conçue pour se coincer sur un organe de l'UAV pour maintenir l'UAV en place sur la plaque de support.

14. Le procédé de la revendication 12, comprenant en outre :
l'ouverture (1004) d'une ou de plusieurs portes d'un contenant logeant la plate-forme pour permettre le levage de la plate-forme jusqu'à la position de lancement ; et
la fermeture des une ou plusieurs portes du contenant pour assujettir la plate-forme stockée dans le contenant.

15. Le procédé de la revendication 8, où le réglage de la plate-forme comprend :
la détection de l'orientation de la plaque de support par rapport à l'horizon ; et
la commande des un ou plusieurs moteurs pour aligner la plaque de support avec l'horizon sur la base de l'orientation détectée de la plaque de support.
